# EUROPEAN PATENT APPLICATION

(11) **EP 0 736 756 A1**
(43) Date of publication of application: **09.10.1996**
(21) Application number: 96104683.6
(22) Date of filing: 25.03.1996
(51) Int. Cl.: G01L 9/06

(54) **Balanced pressure sensor by arrangement of piezoresistive elements in a diaphragm**

(30) Priority: 03.04.1995 US 416119
(71) Applicant: MOTOROLA, INC., Schaumburg, IL 60196 (US)
(72) Inventor: Baskett, Ira E., Tempe, Arizona 85283 (US)
(74) Representative: Spaulding, Sarah Jane

(57) **Abstract**

A balanced pressure sensor employing a first and a second pair of piezoresistive elements (56,58) are positioned adjacent to an edge (54) of a silicon diaphragm (50). Each of pair of piezoresistive elements (56,58) is additionally positioned to lie on opposite sides of a line of stress maxima points and consists of at least two resistors oriented with their long axis's perpendicular to one another.

## Description

### Background of the Invention

This invention relates to silicon pressure sensors in general and more particularly to silicon pressure sensors with a balanced electrical bridge circuit.

Silicon pressure sensors utilizing thin silicon diaphragms are well known. Typically a portion of a silicon substrate is etched to form a region sufficiently thin to flex in response to a differential pressure, thus forming a thin silicon diaphragm. Application of a differential pressure can be implemented in a number of physical configurations tailored to specific needs. Regardless of the manner employed to apply a differential pressure, its application to the diaphragm causes the diaphragm to flex which results in stresses that change the resistance of silicon resistors formed within the diaphragm. The resistance change is proportional to the pressure acting on the diaphragm. This piezoresistive response of properly oriented silicon resistors due to flexing of the silicon crystal, and the resulting stress such flexing causes, is a well known phenomenon that has been utilized for the manufacture of pressure transducers. The two most common methods of sensing this change in resistance have been a conventional Wheatstone bridge approach and the four connector resistive element.

The Wheatstone bridge approach can be implemented using several methods of resistor placement. A first arrangement forms a resistor in a rectangular diaphragm adjacent to each of the four edges. Another variation is to form four resistors equidistant from one another and adjacent to the circumference of a circular diaphragm. A third arrangement forms the resistors in a single line that traverses the length and width of a rectangular diaphragm or the radius of a circular diaphragm. Regardless of which arrangement is employed, accurate placement of the resistive elements in the diaphragm is critical to the proper function of the pressure sensor. This is because different areas of a diaphragm flex differently and cause varying stresses.

While pressure transducers employing one of the conventional Wheatstone approaches have been successfully manufactured, they suffer from several disadvantages. For example, small differences in the individual resistance values of the four resistor elements caused by routine process variations can contribute to a significant zero point offset in the bridge. Often these process variations are a result of the relatively large separation between elements required by a specific placement scheme. Thus the relative positions of the four elements may not be well matched to one another or to points of maximum stress of the diaphragm. This may be due, for example, to photolithography tolerances such as pattern definition and alignment. In addition, the electrical coupling of the resistive elements of the bridge is often cumbersome due to their orientation on the diaphragm. This typically results in long metal connective paths external to the diaphragm which make integration of semiconductor circuit elements on the substrate difficult.

An alternative to the Wheatstone bridge approach is the four connector resistive element. This is the subject of U.S. Patent No. 4,317,126 issued to Gragg Jr., and assigned to the same assignee as the present invention. One implementation of this latter approach is known as the X-ducer™, a trademark of Motorola, Inc. While the four connector resistive surface or X-ducer™ configuration can eliminate some of the problems associated with the conventional Wheatstone bridge approaches, it is not trouble free. One problem area of the X-ducer™ is the inability to allow individual adjustment or trim of the two signal polarities. In addition to this problem, the X-ducer™ has a lower sensitivity and very low impedance compared to the conventional Wheatstone bridge. Also, while the X-ducer™ is oriented adjacent to a single diaphragm edge thus making integration to circuitry on the adjacent areas of the substrate more readily available, it remains sensitive to process variations in alignment and, due the relatively large size of its single element, to process variations in registration with respect to the diaphragm edge and points of maximum stress.

Thus there exists the need for a reliable, high sensitivity pressure transducer that has a balanced output. There also exists the need for a balanced high sensitivity pressure transducer that is relatively insensitive to manufacturing process variations. In addition there exists a need for a high sensitivity balanced output pressure sensor that is easily integrated with control and sensing circuitry on the same substrate. Finally, there exists a need for a high sensitivity balanced pressure transducer that can offer direct offset trimming.

### Brief Description of the Drawings

FIG. 1 is a top view of a conventional layout of piezoresistive elements of a Wheatstone bridge pressure sensor;
FIG. 2 is a representation of stress contours adjacent to the edge of a silicon diaphragm;
FIG. 3 is a top view of a four connector resistive surface pressure sensor, known as the Motorola X-ducer™, shown located adjacent a diaphragm edge;
FIG. 4 is a top view of the piezoresistive elements of a balanced pressure sensor located adjacent an edge of a silicon diaphragm; and
FIG. 5 is a top view of a silicon diaphragm illustrating a preferred location for the placement of the piezoresistive elements on the diaphragm.

### Detailed Description of the Drawings

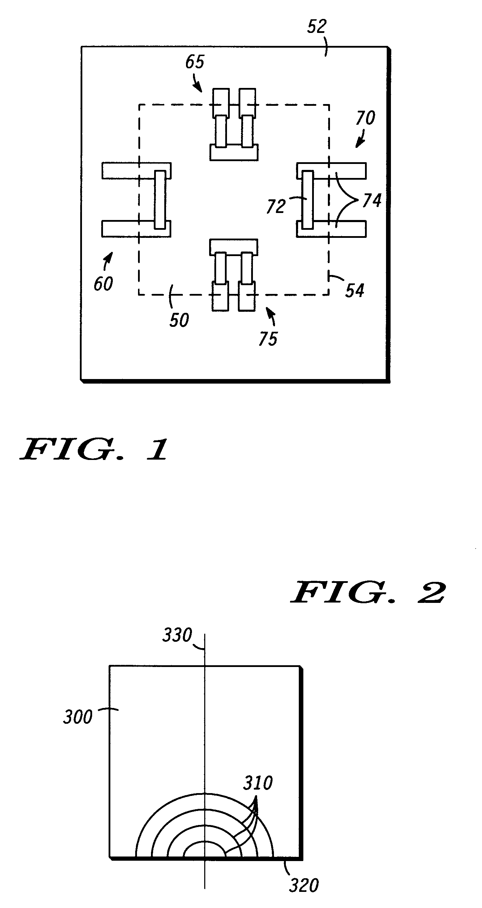

FIG. 1 depicts the arrangement of piezoresistive elements 60, 65, 70 and 75 on a diaphragm 50 of a Wheatstone bridge pressure sensor. A conventional layout of the piezoresistive elements, one element adjacent each edge of diaphragm 50, is illustrated. Diaphragm 50 is typically uniformly thin and has been formed in substrate 52 by methods well known in the art. Four piezoresistive elements 60, 65, 70 and 75 are formed by doping regions of the diaphragm with a dopant of a conductivity type opposite that of diaphragm 50. For example, a diaphragm formed in an N type substrate would be doped with P type dopant to form the piezoresistive elements therein. The method used to form these doped regions is well known to those skilled in the semiconductor arts and can include diffusion and/or ion implantation processes. If diaphragm 50 were non-rectangular, for example circular, the piezoresistive elements would typically be positioned equidistant from one another and adjacent the circumference of the diaphragm.

As seen in FIG. 1, each piezoresistive element 60, 65, 70 and 75 is comprised of several portions. For example, piezoresistive element 70 has a first rectangular portion 72 that is oriented essentially parallel to an adjacent edge of diaphragm 50 and two second rectangular portions 74, coupled to first portion 72, oriented essentially perpendicular to the adjacent edge of diaphragm 50 and crossing an edge 54 so that some of each second portion 74 is formed in the diaphragm 50 and the remainder in the substrate 52. First portion 72 is more resistive than second portions 74 and the total resistance of element 70 is essentially the resistance of first portion 72. Second portions 74 perform the function of electrically coupling first portion 72 to areas on substrate 52 to enable metal connectors (not shown) to electrically couple the elements into a Wheatstone bridge circuit as well as electrically couple the Wheatstone bridge circuit to other necessary circuit elements. Thus, a person of ordinary skill in the art knows that to effect electrical coupling of each piezoresistive element 60, 65, 70 and 75 to one another and to other circuit elements, external to diaphragm 50 and/or substrate 52, it is necessary to essentially encircle diaphragm 50 with metal connectors. This necessary encircling of diaphragm 50 by metal makes the integration of control and measuring circuitry located on substrate 52 and with the Wheatstone bridge elements located on pressure sensing diaphragm 50 difficult.

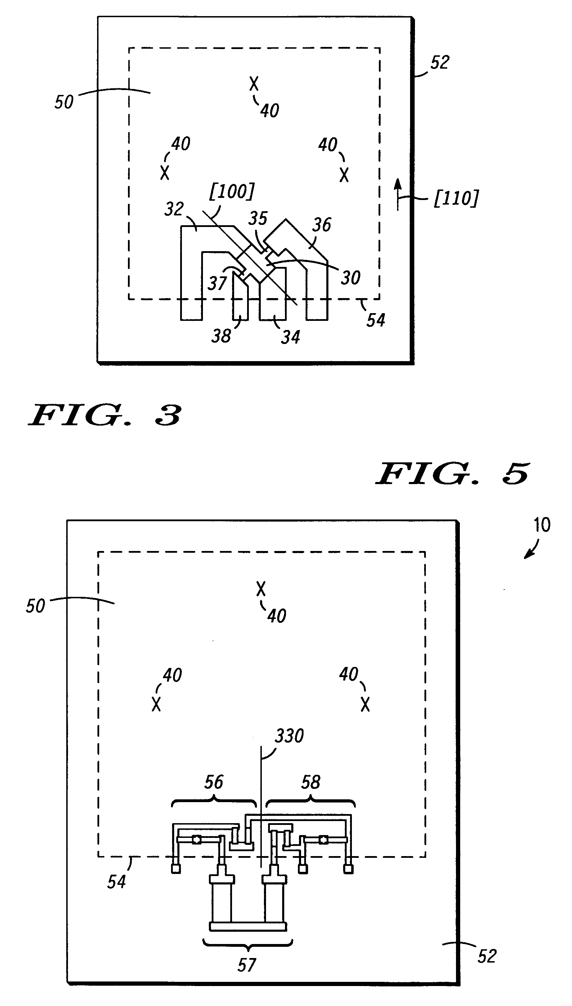

Referring now to FIG. 2, stress contour lines 310 are illustrative of stress along one edge of a uniformly thin silicon diaphragm 300. Each of stress contour lines 310 represent a line of constant stress different from an adjacent line 310. As is well known to one skilled in the art, stress contour line 310 closest to edge 320 of silicon diaphragm 300 represents a relatively high stress level in diaphragm 300. This level of stress decreases moving towards the center of diaphragm 300, thus stress contour line 310 farthest from edge 320 represents a relatively low stress level in diaphragm 300. Contour lines 310, of FIG. 2, are only illustrative of the relative variation in stress at different positions in silicon diaphragm 300. As is well known, the piezoresistive effect is stress related. Hence piezoresistive elements located at high stress regions will generate larger changes in resistance than identical elements located at low stress regions.

Also seen in FIG. 2 is that each stress contour line 310 reaches a maximum value at an approximate midpoint of edge 320. These maximum values can be used to define a line of stress maxima points 330. Thus by calculating stress contour lines 310 it is possible to determine the position of the line of stress maxima points 330. (It is important to understand, when viewing FIG. 2, that stress contour lines 310 and the line of stress maxima points 330 are merely representations that are not actually visible when viewing a silicon diaphragm). The line of stress maxima points 330 thus divides edge 320 into two mirror image regions at approximately the midpoint of edge 320. In addition, each or any edge 320 of silicon diaphragm 300 could be used to determine optimum placement of the piezoresistive elements. A four edged diaphragm will have four sets of stress contour lines and two lines of stress maxima points perpendicular to one another.

Referring again to FIG. 1, it can be seen that each piezoresistive element 60, 65, 70 and 75, of the conventional Wheatstone bridge pressure sensor, is located adjacent to an edge of diaphragm 50. In addition, it is apparent that each piezoresistive element 60, 65, 70 and 75 is also located as close to a center line of their respective edge 54 as possible, thus placing each element at a high stress location. One skilled in the art will understand that non-rectangular silicon diaphragms also have points of maximum stress, and that optimizing the performance of a non-rectangular diaphragm pressure sensor is also determined via the calculation of the positions of stress contour lines 310 thereby facilitating manufacture.

Referring now to FIG. 3, a four connector resistive element positioned on a silicon diaphragm, known commonly as the Motorola X-ducer™, is seen. The Motorola X-ducer™ has proven successful as a pressure sensing means that allows integration of control and measuring circuitry onto a common substrate as all electrical coupling means are gathered along a single edge of the diaphragm. Four connector resistive element 30 is formed in a silicon diaphragm oriented with its long axis parallel to the [100] crystal plane of the silicon crystal. As in the case of piezoresistive elements previously described, resistive element 30 is formed by doping a desired region of diaphragm 50 with a dopant of a conductivity type opposite to that of diaphragm 50. In addition, current contacts 32 and 34 are also formed by doping regions of the diaphragm, as are voltage contacts 36 and 38. Current contacts 32 and 34, and voltage contacts 36 and 38 are typically heavily doped, high conductivity regions which provide a low impedance path from resistive element 30 to locations off of diaphragm 50, as seen in FIG. 3. Current contacts 32 and 34 are coupled electrically to resistive element 30 at opposing ends of the resistive element 30, while voltage contacts 36 and 38 are electrically coupled to resistive element 30 through voltage taps 35 and 37. Voltage taps 35 and 37 are seen positioned along opposing sides of resistive element 30, approximately midway along its long axis.

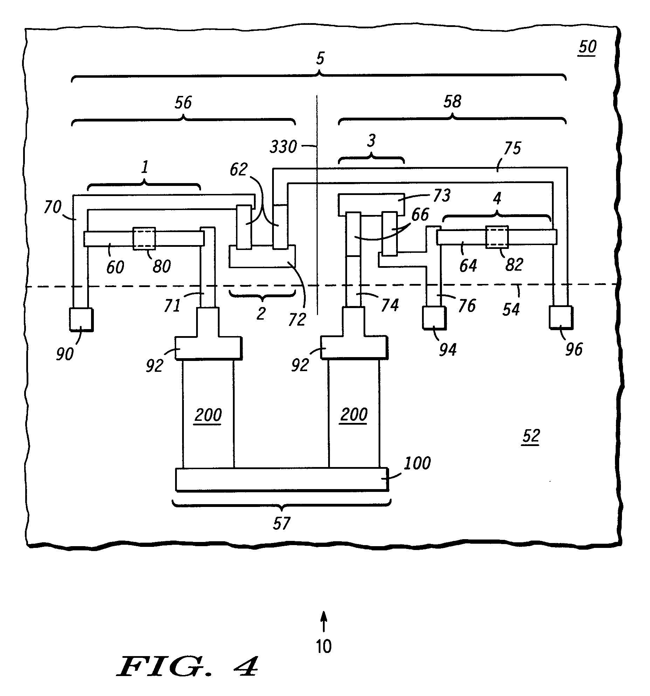

FIG. 4 shows a preferred embodiment of balanced pressure sensor 10 positioned in an optimal manner adjacent edge 54 of a portion of diaphragm 50. Diaphragm 50 is formed in a semiconductor substrate 52 of a first conductivity type. Sensor 10 consists of three principal sections, first pair of piezoresistive elements 56, located on a side of the line of stress maxima points 330, second pair of piezoresistive elements 58, located on an opposite side of the line of stress maxima points 330, and optional trimmable resistors 57, located off of diaphragm 50. It is important to note, that unlike the conventional Wheatstone bridge pressure sensor of FIG. 1 or the Motorola X-ducer™ of FIG. 3, the balanced pressure sensor 10 allows a balanced placement of the piezoresistive elements about the line of stress maxima points 330. One skilled in the art will realize from applicant's disclosure that such a balanced placement of piezoresistive elements will result in a balanced output from each pair of elements.

First and second pair of piezoresistive elements, or piezoresistors, (56, 58) are electrically coupled to form an electrical resistance bridge circuit 5 with first, second, third and fourth arms (1, 2, 3, and 4). The first arm 1 has a resistance R₁, the second arm 2 has a resistance R₂, the third arm 3 has a resistance R₃ and the fourth arm 4 has a resistance R₄. As first pair 56 and second pair 58 are formed and oriented in essentially the same manner, only the formation of first pair 56 will be discussed.

First pair 56 is electrically equivalent to a pair of resistors of essentially equal resistance, R₁ and R₂, electrically coupled in series. Additionally, first pair 56 can be viewed as the first and second arm (1 and 2)of an electrical bridge circuit 5. As indicated in FIG. 4, first arm 1 physically consists of resistive element 60 and second arm 2 consists of resistive elements 62. Resistive elements 60 and 62 are typically, essentially rectangular. In the embodiment shown, a long axis of rectangular element 60 is oriented essentially parallel to edge 54 of diaphragm 50, while a long axis of each rectangular element 62 is oriented essentially perpendicular to edge 54, thus element 60 and element 62 comprise a pair of perpendicular resistors. Turning to resistive elements 62, it is seen that two essentially rectangular regions are coupled to one another at adjacent ends by a connecting region 72 to form a single resistive element. As is well known to those skilled in the art, the resistive element oriented perpendicular to an adjacent edge of a diaphragm is typically divided into at least two parallel portions. Referring to the stress contour lines 330 it is readily seen that this splitting of resistive element 62 into two essentially rectangular regions, allows each of these regions to be within essentially identical stress sensing environments thus minimizing any variation in piezoresistive response that might occur if a single, long element had been employed.

First pair 56, also comprises a plurality of connecting regions 70, 71 and 72. Connecting regions 70, 71 and 72 serve to electrically couple resistive elements 60 and 62 to one another, as well as to resistive elements 64 and 66 of second pair 58 and to electrical contact regions 90, 92, 94 and 96 located on substrate 52. Optionally, as seen in FIG. 4, connecting regions 71 and 74 may also couple a trimmable resistor 57 to each pair of piezoresistive elements 56 and 58, thus enabling individual and independent trimming of signal polarities.

First and second pairs of piezoresistive elements 56 and 58 are formed by doping selected regions of diaphragm 50 with an impurity. Resistive elements 60 and 62 are formed by doping those selected regions to a first concentration with an impurity of a second conductivity type opposite that of diaphragm 50. Connecting regions 70-72 are formed in a similar manner, but are doped with the impurity of the second type to a second concentration, higher than the first concentration. In addition, forming connecting regions 70-72 also includes doping selected regions in substrate 52 to enable electrical coupling with contact regions 90 and 92. Typically the first concentration results in a first resistivity, of resistive elements, in the resistivity range of 100 to 2000 ohms per square and the resulting second resistivity of the second concentration, of the connecting regions, will be approximately less than ten percent of the resulting first resistivity of the first concentration. In any event the actual value of the second concentration must be such, that the resulting second resistivity of connecting regions does not appreciably interfere with the operation of the resistance bridge circuit.

As matching the resistance of each pair of piezoresistive elements 56 and 58 to one another is important to obtain optimum performance, so too is matching the resistance of resistive elements within each pair, for example elements 60 and 62. Therefore, optional, matching regions 80 and 82 may be formed to enhance such matching. As one skilled in the art is aware, the resistance of a diffused or implanted resistor is viewed as the series sum of resistivities. For example, a resistor with the dimensions of 1 wide by 3 long, and doped to a resistivity of 100 ohms per square has a resistance of 100 + 100 + 100 = 300 ohms. Now comparing resistive element 60 to resistive element 62, one skilled in the art would know that a better match of resistances would be obtained if a simulation of connecting region 72 could be created to sum with resistive region 60. Thus, if such a matching of resistances is required, a matching region 80 can be formed and electrically coupled to resistance element 60 to simulate the series resistance effect of connecting region 72 in resistance elements 62. Matching regions 80 and 82 can be formed by doping those selected regions with an impurity of the second type to a third concentration. The third concentration is selected so that the resistance of the matching regions 80 and 82 is approximately equal to the resistance of a typical connecting region, for example region 72.

In addition to optional matching regions 80 and 82, optional trimmable resistors 52 can be formed. Trimmable resistors 52 comprise trimmable regions 200 which are formed from any of the materials well known to those skilled in the art, such as Nichrome. Trimmable resistors 52 are electrically coupled to the first pair and the second pair of piezoresistive elements (56, 58) in a manner that allows trimming of each pair, independent of the other. Thus allowing precise adjustment of the zero offset of the electrical bridge circuit formed. Typically, the electrical coupling to ground (100) for each of the first and the second pair of piezoresistive elements is formed through separate trimmable regions 200 of the trimmable resistors 52.

Referring now to FIG. 5, balanced pressure sensor 10 is shown positioned on complete pressure sensitive diaphragm 50. Indicated is the relative position of sensor 10 with respect to the line of stress maxima points 330, the approximate midpoint position of line 330 on edge 54, and alternative locations 40, where balanced pressure sensor 10 could be positioned. It can also be seen that first pair 56 is positioned on a first side of line 330, and second pair 58 is positioned on a second side thereof. This balanced positioning of the paired elements of sensor 10 results in a matching of response to stress in diaphragm 50 by sensor 10 that cannot be equaled by other known pressure sensors. This superior response matching is due to balanced positioning of the piezoresistive elements about the line of stress maxima points 330. In comparison, even minor photolithographic registration errors can result in all piezoresistive elements positioned on a single side of line 330 in a conventional Wheatstone bridge circuit. This alignment advantage is also significant with respect to a single element sensor, such as the Motorola X-ducer™ seen in FIG. 3, where any misregistration moves the entire sensing means in a particular direction, thus skewing the output. Additionally, the close proximity of elements minimizes variations in doping and pattern definition, which are known to vary over distances of the order of a conventional diaphragm. It should be apparent that an increased signal output can be obtained by forming a balanced pressure sensor 10 at a plurality of alternate locations 40. Finally, one skilled in the art will see that the balanced position of the elements also will result in balanced thermal impedance of each piezoresistive element to the diaphragm edge, resulting in equal heating, especially when using pulsed excitation for sensing.

By now it should be appreciated from the description and figures provided that a novel balanced pressure sensor and method has been provided. Comparing the balanced pressure sensor 10 of FIG. 5 with the conventional Wheatstone bridge pressure sensor illustrated in FIG. 1, it can be seen that the balanced positioning of the piezoresistive elements overcome a number of the problems associated with the Wheatstone bridge pressure sensor without sacrificing the ease of integration with on-chip circuitry of the Motorola X-ducer™ as seen in FIG. 3. Thus positioning the elements of the balanced pressure sensor along a single edge with a pair of elements on each side of the line of stress maxima points 330, eliminates variations in processing caused by the separation required in conventional Wheatstone bridge placements. Furthermore, the description and figures provided set forth the advantages of the embodiment shown in providing a means for balancing the arms of a resistance bridge on opposing sides of the line of stress maxima points. The close proximity of the elements of the balanced pressure sensor virtually eliminate pattern positioning errors with respect to balancing the bridge elements. Finally, the description and figures provided make obvious the advantage of combining the ability to individually and independently trim each pair of arms of the resistance bridge and to collect all sensor outputs to a single location for enhanced integration of the sensor with semiconductor circuit elements thus enabling reductions in size and cost.

## Claims

1. A balanced pressure sensor (10) comprising:
a semiconductor substrate (52) of a first conductivity type, having therein a pressure sensitive diaphragm (50) having at least one edge (54);
a first pair and a second pair of piezoresistive elements (56, 58), wherein each element (60, 62, 64, 66) of said first pair (56) and said second pair (58) is doped to a first concentration with an impurity of a second conductivity type and further comprising a first resistivity, and wherein each element (60, 62) of said first pair (56) is oriented essentially perpendicular to each other and each element (64, 66) of said second pair (58) is oriented essentially perpendicular to each other, and wherein said first pair and said second pair of piezoresistive elements (56, 58) are positioned adjacent to said at least one edge (54) of said pressure sensitive diaphragm (50) in a manner so that said first pair (56) is positioned on a first side of an approximate midpoint of said at least one edge (54) and said second pair (58) is positioned on a second side thereof; and
a plurality of connecting regions (70, 71, 72, 73, 74, 75, 76), each connecting region being doped to a second concentration with an impurity of the second conductivity type and further comprising a second resistivity, wherein the second resistivity is less than the first resistivity, and wherein said plurality of connecting regions (70, 71, 72, 73, 74, 75, 76) couple said first and second pair of piezoresistive elements (56, 58) together to form an electrical bridge circuit (5).

2. The balanced pressure sensor (10) of claim 1 wherein said first and second pair of piezoresistive elements (56, 58) are further positioned adjacent to said at least one edge (54) of the pressure sensitive diaphragm (50) such that an element (62, 66) of said first pair and said second pair of elements (56, 58) is essentially perpendicular to said at least one edge (54) of said pressure sensitive diaphragm (50).

3. The balanced pressure sensor (10) of claim 2 wherein said element (62, 66) of said first pair and said second pair of elements (56, 58), is positioned essentially perpendicular to said at least one edge (54) of said pressure sensitive diaphragm (50), and formed in two parallel portions (62, 66) electrically connected at adjacent ends by a connecting region (72, 73).

4. The balanced pressure sensor (10) of claim 1 wherein said electrical bridge circuit (5) further comprises an electrical coupling to ground (100) for each of said first pair and said second pair of piezoresistive elements (56, 58).

5. The balanced pressure sensor (10) of claim 4 wherein the electrical coupling to ground (100) for each of said first pair and said second pair of piezoresistive elements (56, 58) is formed through a trimmable resistor (200) located external to said pressure sensitive diaphragm (50).

6. The balanced pressure sensor (10) of claim 1, wherein said first pair of piezoresistive elements (56) has a resistance approximately equal to said second pair of piezoresistive elements (58), and said first and second pair of piezoresistive elements (56, 58) have a resistivity range of approximately 100 to 2000 ohms per square.

7. A method of manufacturing a pressure sensor with balanced piezoresistors (10) comprising:
providing a pressure sensitive silicon diaphragm (50) of a first conductivity type having an edge (54);
determining a line of maxima stress points (330), essentially perpendicular to the edge (54); and
forming a first pair and a second pair of piezoresistors (56, 58) of a second conductivity type, wherein said first pair and said second pair of piezoresistors (56, 58) further comprise a pair of perpendicular resistors (60 and 62, 64 and 66) positioned adjacent to said edge (54), and wherein said first pair (60 and 62) is positioned on a first side of the line of maxima stress points (330) and said second pair (64 and 66) is positioned on a second side thereof, and wherein said first pair and said second pair of piezoresistors (56, 58) are electrically coupled to form a resistance bridge (5).

8. The method of manufacturing a pressure sensor with balanced piezoresistors (10) of claim 7, wherein the step of providing a pressure sensitive silicon diaphragm (50) includes providing an essentially rectangular pressure sensitive diaphragm (50).

9. The method of manufacturing a pressure sensor with balanced piezoresistors (10) of claim 7, wherein the step of forming a first and second pair of piezoresistors (56, 58) further includes doping said first and said second pair of piezoresistors (56, 58) to an approximately equal resistance wherein said first and said second pair of piezoresistors (56, 58) have a resistivity range of approximately 100 to 2000 ohms per square.

10. The method of manufacturing a pressure sensor with balance piezoresistors (10) of claim 7, wherein the step of forming a first pair and a second pair of piezoresistors (56, 58) electrically coupled to form a resistance bridge (5) further comprises electrically coupling said resistance bridge (5) to ground through trimmable resistors (200) located off of said pressure sensitive silicon diaphragm (50).
